# DEMANDE DE BREVET EUROPEEN

(11) **EP 0 579 551 A1**
(43) Date de publication de la demande: **19.01.1994**
(21) Numéro de dépôt: 93401829.2
(22) Date de dépôt: 15.07.1993
(51) Int. Cl.: B60S 1/38, B60S 1/24

(54) **Bielle de liaison renforcée pour une timonerie d'un système d'essuie-glace de véhicule automobile**

(30) Priorité: 15.07.1992 FR 9208707
(71) Demandeur: VALEO SYSTEMES D'ESSUYAGE, 78180 Montigny-Le-Bretonneux (FR)
(72) Inventeur: Boissac, Jean-Paul, F-86100 Chatellerault (FR)
(74) Mandataire: Gamonal, Didier

(57) **Abrégé**

L'invention propose une bielle de liaison (10) pour une timonerie d'entraînement d'un système d'essuie-glace, notamment de véhicule automobile, du type comportant un dos (12) et deux flancs latéraux (14) qui présente, en section transversale, un profil sensiblement en forme de U, caractérisée en ce qu'elle comporte au moins une nervure (15, 18) longitudinale de renfort.

## Description

La présente invention concerne un élément de timonerie d'entraînement d'un système d'essuie-glace.

L'invention concerne plus particulièrement une bielle de liaison du type comportant un dos et deux flancs longitudinaux et qui présente, en section transversale par un plan perpendiculaire à la direction longitudinale de la bielle, un profil sensiblement en forme de U.

Dans les systèmes d'essuie-glace qui équipent les véhicules automobiles, les manivelles motrices sont chacune solidaires en rotation, d'une part d'un arbre moteur et, d'autre part d'un arbre d'extrémité d'un maneton à rotule, sur lequel s'articule une bielle de liaison à une manivelle de sortie du mécanisme d'entraînement d'un balai d'essuie-glace.

La réalisation de la bielle de timonerie sous la forme d'un profilé en U s'avère, dans certaines circonstances, insuffisante pour que celle-ci puisse encaisser les différents efforts auxquels elle est soumise et résister notamment aux efforts de flexion et de flambage.

Afin de remédier à ces inconvénients, l'invention propose une bielle du type mentionné précédemment, caractérisée en ce qu'elle comporte au moins une nervure longitudinale de renfort.

Selon d'autres caractéristiques de l'invention :
- une nervure est formée dans le dos de la bielle ;
- la nervure est formée en relief sur la face externe du dos de la bielle ;
- le dos comporte une nervure centrée par rapport au plan longitudinal médian de la bielle ;
- au moins une nervure est formée dans un flanc latéral de la bielle ;
- au moins une nervure est formée dans chacun des flancs latéraux de la bielle ;
- la nervure est formée en relief sur la face interne du flanc latéral ;
- les nervures sont réalisées par emboutissage ;
- le bord inférieur de chaque flanc latéral est replié transversalement, notamment vers l'extérieur.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section transversale d'un premier mode de réalisation d'une bielle conformément aux enseignements de l'invention ; et
- les figures 2 à 4 sont des vues similaires à celles de la figure 1 qui illustrent trois autres modes de réalisation de l'invention.

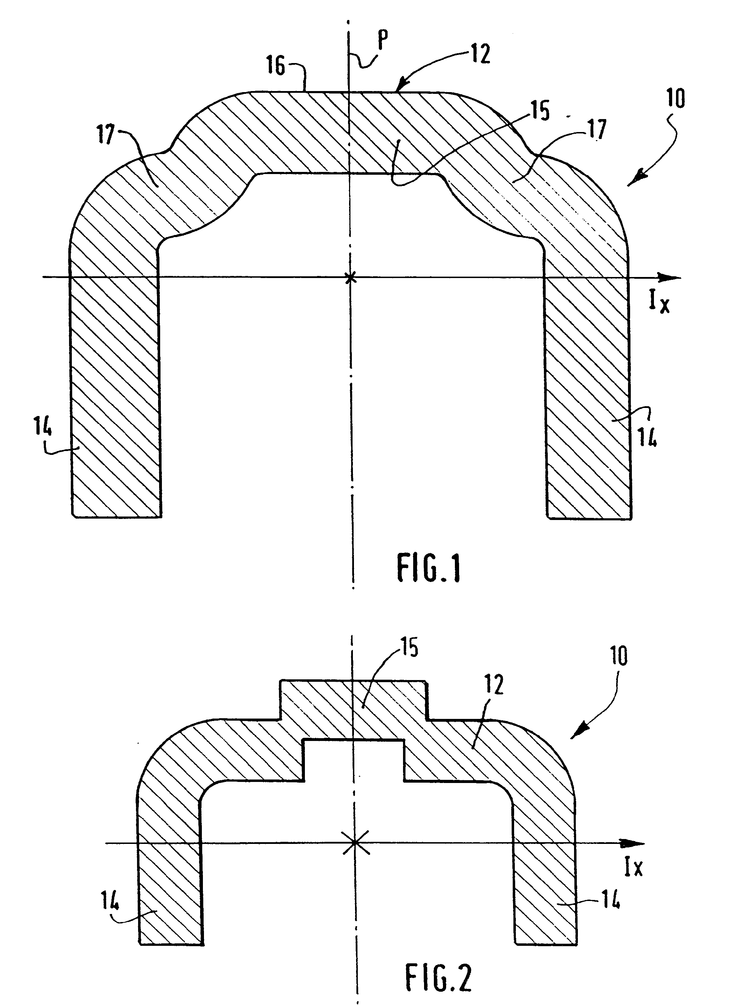

La bielle 10 illustrée à la figure 1 en section transversale présente une symétrie de conception et de réalisation par rapport à un plan longitudinal médian P.

La bielle présente sensiblement la forme d'un U inversé et est constituée à cet effet d'un dos 12 et de deux flancs latéraux sensiblement parallèles et opposés 14 perpendiculaires au plan du dos 12.

Afin d'accroître la résistance de la bielle 10 et notamment d'augmenter le moment d'inertie de sa section transversale par rapport à l'axe lx, le dos 12 comporte une nervure centrale 15. Cette nervure peut s'étendre tout au long de la bielle ou en partie. De même il peut être prévu que la nervure soit discontinue.

La nervure 15 est formée en relief sur la face externe 16 du dos 12 et est reliée aux flancs latéraux 14 par deux portions de liaison 17 en forme de S.

La nervure 15 est réalisée par exemple par emboutissage, avant le pliage à 90° des flancs latéraux 14, ou par nervurage, et ceci afin de ne pas augmenter la largeur de la bande de flan de tôle servant habituellement à réaliser une bielle selon l'état de la technique à profil en U inversé sans nervure.

Dans le mode de réalisation illustré à la figure 2, la nervure centrale 15 est plus étroite et est formée dans la partie centrale du dos 12 par déplacement de matière obtenu par nervurage.

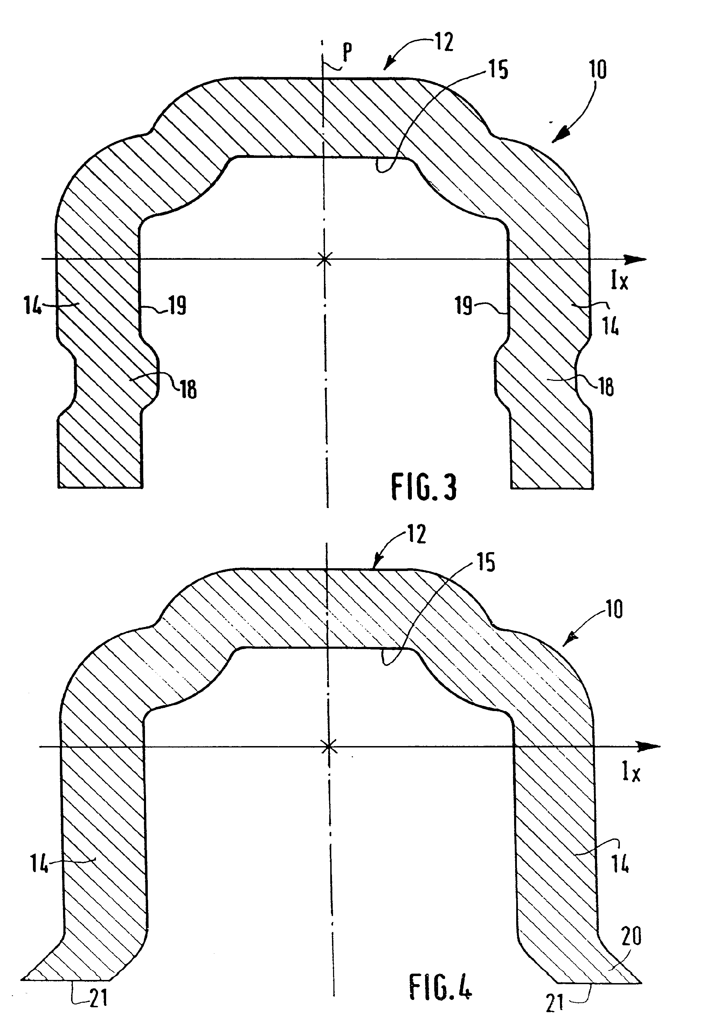

Dans le mode de réalisation illustré à la figure 3, outre une nervure 15 formée dans le dos 12, identique à celle illustrée à la figure 1, la bielle 10 comporte deux nervures latérales 18 formées chacune respectivement, sensiblement à mi-hauteur, dans un des flancs latéraux 14, ici les deux flancs.

Chacune des nervures 18 est formée en relief sur la face interne 19 du flanc latéral correspondant 14, c'est-à-dire qu'elle fait saillie transversalement vers l'intérieur du U.

Dans le mode de réalisation illustré à la figure 4, outre la nervure 15 formée dans le dos 12 de la même manière que celle illustrée à la figure 1, la partie inférieure 20 de chacun des flancs transversaux 14 agencée à proximité du bord inférieur 21 est pliée transversalement vers l'extérieur de manière à ce que la base du U inversé présente une forme sensiblement évasée.

Sans sortir du cadre de l'invention, il est également possible de concevoir que les bielles réalisées avec des rainures sont obtenues par étirage sous la forme d'un profilé.

## Revendications

1. Bielle de liaison (10) pour une timonerie d'entraînement d'un système d'essuie-glace, notamment de véhicule automobile, du type comportant un dos (12) et deux flancs latéraux (14) et qui présente, en section transversale, un profil sensiblement en forme de U, caractérisée en ce qu'elle comporte au moins une nervure (15, 18) longitudinale de renfort.

2. Bielle de liaison selon la revendication 1, caractérisée en ce que au moins une nervure (15) est formée dans le dos (12) de la bielle (10).

3. Bielle de liaison selon la revendication 2, caractérisée en ce que la nervure (15) est formée en relief sur la face externe (16) du dos (12).

4. Bielle de liaison selon l'une des revendications 2 ou 3, caractérisée en ce que le dos comporte une nervure de renfort (15) centrée par rapport au plan longitudinal médian (P) de la bielle (10).

5. Bielle de liaison selon l'une quelconque des revendications précédentes, caractérisée en ce qu'elle comporte au moins une nervure (18) formée dans un flanc latéral (14).

6. Bielle selon la revendication 5, caractérisée en ce qu'elle comporte au moins une nervure (18) formée dans chacun des flancs latéraux (14).

7. Bielle de liaison selon l'une quelconque des revendications 5 ou 6, caractérisée en ce que la nervure (18) est formée en relief sur la face interne (19) du flanc latéral (14).

8. Bielle de liaison selon l'une quelconque des revendications précédentes, caractérisée en ce que la nervure est réalisée par emboutissage.

9. Bielle de liaison selon l'une quelconque des revendications précédentes, caractérisée en ce que le bord inférieur (20, 21) de chaque flanc latéral (14) est replié transversalement.

10. Bielle de liaison selon la revendication 9, caractérisée en ce que le bord (20, 21) est replié transversalement vers l'extérieur.
